(19) Europäisches Patentamt
European Patent Office
Office européen des brevets

(11) **EP 3 669 255 B1**

(12) **EUROPÄISCHE PATENTSCHRIFT**

(45) Veröffentlichungstag und Bekanntmachung des Hinweises auf die Patenterteilung:
**24.04.2024   Patentblatt 2024/17**

(21) Anmeldenummer: **19716386.8**

(22) Anmeldetag: **05.04.2019**

(51) Internationale Patentklassifikation (IPC):
**G06F 3/0338** *(2013.01)*     **G06F 1/16** *(2006.01)*
**G05G 9/047** *(2006.01)*

(52) Gemeinsame Patentklassifikation (CPC):
**G06F 3/0338; G05G 9/04737; G06F 1/169;**
G05G 2009/04755

(86) Internationale Anmeldenummer:
**PCT/EP2019/058584**

(87) Internationale Veröffentlichungsnummer:
**WO 2019/193130 (10.10.2019 Gazette 2019/41)**

(54) **3D-EINGABEGERÄT**

3D INPUT DEVICE

APPAREIL D'ENTRÉE 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2018   DE 102018205159**

(43) Veröffentlichungstag der Anmeldung:
**24.06.2020   Patentblatt 2020/26**

(73) Patentinhaber: **Deutsches Zentrum für Luft- und Raumfahrt e.V.**
**51147 Köln (DE)**

(72) Erfinder:
• **SENFT, Volker**
**82229 Seefeld (DE)**
• **REILL, Josef**
**86916 Kaufering (DE)**
• **WEDLER, Armin**
**80636 München (DE)**
• **SEITZ, Nikolaus**
**82234 Oberpfaffenhofen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A2- 0 480 471        DE-A1-102010 062 458**
**US-A- 5 504 502          US-A1- 2012 287 032**
**US-A1- 2013 178 293     US-A1- 2017 269 587**

**Beschreibung**

Die Erfindung betrifft ein 3D-Eingabegerät, insbesondere ein mobiles 3D-Eingabegerät. Ferner betrifft die Erfindung ein Mobilgerät sowie eine 3D-Fernsteuerung, die jeweils mindestens ein erfindungsgemäßes 3D-Eingabegerät aufweisen.

3D-Eingabegeräte werden insbesondere genutzt, um dreidimensionale Eingaben, beispielsweise dreidimensionale Bewegungsbefehle, an ein Computersystem zu übergeben. Zum Beispiel werden sogenannte 3D-Mäuse in 3D-Konstruktionssoftware dazu verwendet, Objekte in einer virtuellen 3D-Umgebung zu bewegen oder dem Benutzer ein Manövrieren durch eine virtuelle 3D-Landschaft zu ermöglichen. Vorzugsweise finden derartige Eingabegeräte zur Erstellung von 3D-Konstruktionen, auch CADs genannt, mithilfe von EDV Anwendung. Darüber hinaus lassen sich 3D-Eingabegeräte in Joysticks, Spielekonsolen, Datenhandschuhen, Computertastaturen, Computermäusen, Trackpads, Touchpads oder Fernsteuerungen nutzen. Ein weiteres Anwendungsfeld für 3D-Eingabegeräte sind Fernsteuerungen für Roboter, beispielsweise für Drohnen.

3D-Eingabegeräte zeichnen sich insbesondere dadurch aus, dass sich mit ihnen sämtliche Relativbewegungen und/oder Relativpositionen zweier Objekte zueinander wiedergeben bzw. eingeben lassen. Derartige Relativbewegungen und/oder Relativpositionen lassen sich mittels sechs Komponenten, nämlich drei Verschiebungen (X, Y, Z) und drei Winkeldrehungen (A, B, C) in bzw. um die drei Achsen des kartesischen Koordinatensystems, beschreiben. Zur Wiedergabe bzw. Eingabe der sechs Komponenten weisen geläufige 3D-Eingabegeräte einen Eingabekörper auf, der zu einem feststehenden Grundkörper entlang der sechs Komponenten beweglich ist. Diese Relativbewegungen und/oder Relativpositionen werden mittels einer Sensorvorrichtung erfasst. Derart können beispielsweise virtuelle Objekte oder Roboter, wie Drohnen, entlang der sechs Komponenten im Raum bewegt werden.

Geläufige 3D-Eingabegeräte sind u.a. aus DE 36 11 337 A1 sowie aus US 2012/0215475 A1 bekannt.

US 2012/287032 A1, US 2013/178293 A1, US 5 504 502 A, US 2017/269587 A1 und DE 10 2010 062458 A1 beschreiben weitere Eingabegeräte des Stands der Technik,

EP 0 480 471 A2 beschreibt einen Kraftdetektor und einen Beschleunigungsdetektor des Stands der Technik.

Einige Eingabegeräte des Stands der Technik weisen den Nachteil auf, dass diese groß sind und sich somit beispielsweise nicht für den mobilen bzw. tragbaren Einsatz eignen.

Aufgabe der Erfindung ist die Schaffung eines miniaturisierten 3D-Eingabegeräts, insbesondere eines miniaturisierten mobilen 3D-Eingabegeräts. Ferner besteht die Aufgabe in der Schaffung eines Mobilgeräts und einer 3D-Fernsteuerung, die ebenfalls miniaturisiert sind.

Die Lösung der Aufgaben erfolgt durch ein 3D-Eingabegerät gemäß Anspruch 1, ein Mobilgerät gemäß Anspruch 14 sowie eine 3D-Fernsteuerung gemäß Anspruch 15.

Bei dem erfindungsgemäßen 3D-Eingabegerät handelt es sich insbesondere um ein mobiles 3D-Eingabegerät, das vorzugsweise tragbar ist. Das 3D-Eingabegerät weist ein Gehäuse und einen innerhalb des Gehäuses angeordneten Eingabekörper auf. Vorzugsweise ist der Eingabekörper in einer, insbesondere durch das Gehäuse durchgehenden, Öffnung, bspw. einer Bohrung angeordnet. Bevorzugt ist es, dass von außerhalb des Gehäuses ein physischer Zugriff, beispielsweise über die Öffnung, auf den Eingabekörper besteht. Einerseits ist es bevorzugt, dass der Eingabekörper vollständig innerhalb des Gehäuses, also innerhalb der Kontur des Gehäuses angeordnet ist. Hierbei schließt der Eingabekörper, zumindest teilweise, bündig mit der Kontur des Gehäuses ab. Andererseits ist es bevorzugt, dass der Eingabekörper über die Kontur des Gehäuses hinausragt. Folglich steht der Eingabekörper aus dem Gehäuse heraus. Bei einem derartigen Herausstehen ist es möglich, dass der Eingabekörper lediglich einseitig oder mehrseitig aus dem Gehäuse heraussteht. Weisen der Eingabekörper beispielsweise die Form eines Kreiszylinders und das Gehäuse die Form eines Quaders auf, so ist es möglich, dass der Eingabekörper lediglich mit dem Abschnitt, der in der Umgebung der Grundfläche der Zylinderform liegt, aus dem Quader heraussteht. Auch möglich ist es, dass der Eingabekörper mit diesem vorstehend beschriebenen Abschnitt sowie dem diesem Abschnitt gegenüberliegenden, also der Grundfläche der Zylinderform gegenüberliegenden, Abschnitt zweiseitig aus der Quaderform des Gehäuses hinausragt. Weisen der Eingabekörper beispielsweise die Form einer Kugel und das Gehäuse die Form eines Würfels auf, so ist es möglich, dass die Kugel an allen sechs Seiten des Würfels hinaussteht. Der Eingabekörper des erfindungsgemäßen 3D-Eingabegeräts weist zumindest eine erste Seite und eine der ersten Seite gegenüberliegende zweite Seite auf. Vorzugsweise liegen sich die Seiten parallel, insbesondere echt parallel, gegenüber. Diese Seiten beschreiben in erster Linie Bereiche des Eingabekörpers bzw. der Umgebung des Eingabekörpers. Jedoch können die Seiten auch physische Flächen oder Abschnitte des Eingabekörpers darstellen. Weitergehend weist das erfindungsgemäße 3D-Eingabegerät eine Sensorvorrichtung auf. Die Sensorvorrichtung ist vorzugsweise zwischen Gehäuse und Eingabekörper angeordnet. Auch ist es möglich, dass die Sensorvorrichtung mit dem Gehäuse und/oder dem Eingabekörper verbunden ist. Bei einer derartigen Verbindung der Sensorvorrichtung mit dem Gehäuse und/oder dem Eingabekörper ist es bevorzugt, dass die Sensorvorrichtung auf dem Gehäuse und/oder auf dem Eingabekörper angeordnet ist. Der Eingabekörper ist relativ zum Gehäuse in sechs Komponenten, nämlich drei Verschiebungen und drei Winkeldrehungen in bzw. um die drei Achsen des kartesischen Koordinatensystems bewegbar. Die Sensorvorrichtung erfasst Bewegungen und/oder Positionen des Eingabekörpers relativ zum Gehäuse. Die erste Seite des Eingabekörpers oder die zweite Seite des Eingabekörpers oder die erste Seite und die zweite Seite des Eingabekörpers zusammen sind derart ausgestaltet, dass ein Benutzer über eine Einwirkung auf den Eingabekörper eine Bewegung des Eingabekörpers entlang der sechs Komponenten vollziehen kann. Bei einem derartigen Einwirken eines Benutzers auf den Eingabekörper handelt es sich insbesondere um eine Berührung und/oder ein Greifen des Benutzers des Eingabekörpers, vorzugsweise mit einem oder mehreren Fingern.

Bevorzugt ist es, dass der Eingabekörper eine Zylinderform, vorzugsweise eine Kreiszylinderform, aufweist. Bei einer derartigen Form des Eingabekörpers ist es bevorzugt, dass die erste Seite des Eingabekörpers der Grundfläche der Zylinderform des Eingabekörpers entspricht. Möglich ist es, dass es sich bei der Zylinderform um eine Vollzylinderform handelt, jedoch ist auch eine Hohlzylinderform möglich. Bei einer Zylinderform handelt es sich nicht zwangsläufig um eine Kreiszylinderform. Auch Formen wie Prismen oder Kegel, etc. sind damit umfasst. Anstelle der Zylinderform für den Eingabekörper ist es auch möglich, dass der Eingabekörper eine Kugelform aufweist.

In bevorzugter Ausführungsform weist der Eingabekörper des erfindungsgemäßen 3D-Eingabegeräts eine erste Fläche auf der ersten Seite und/oder eine zweite Fläche auf der zweiten Seite auf. Beide dieser Flächen können unabhängig voneinander beispielsweise konvex oder konkav oder eben ausgestaltet sein. Weist der Eingabekörper eine Zylinderform auf, handelt es sich vorzugsweise bei der ersten Fläche um die Grundfläche des Zylinders und bei der zweiten Fläche um die der Grundfläche gegenüberliegende Fläche des Zylinders. Die erste Fläche und/oder die zweite Fläche sind hierbei einem Benutzer zugänglich angeordnet, so dass ein Benutzer vorzugsweise einwirkenden Zugriff auf die erste und/oder zweite Fläche hat. Die Ausführung des 3D-Eingabegeräts, insbesondere des Eingabekörpers, ist hierbei derart, dass zumindest eine Fläche, insbesondere beide Flächen gleichzeitig, durch einen Benutzer in Bewegung versetzt werden können. Eine derartige Bewegung des Eingabekörpers erfolgt derart, dass der Eingabekörper entlang der sechs Komponenten relativ zum Gehäuse ausgelenkt werden kann.

Vorzugsweise weist der Eingabekörper eine von der ersten Seite zur zweiten Seite verlaufende Öffnung auf. Der Öffnungsdurchmesser dieser Öffnung entspricht insbesondere im Wesentlichen dem Durchmesser eines menschlichen Fingers. Darüber hinaus ist die Öffnung vorzugsweise derart ausgeführt, dass ein Benutzer zumindest einseitig, insbesondere beidseitig, in die Öffnung eingreifen kann.

Das 3D-Eingabegerät weist vorzugsweise mindestens eine Schlaufe, insbesondere eine Fingerschlaufe, auf. Diese mindestens eine Schlaufe ist auf der ersten Seite des Eingabekörpers und/oder auf der zweiten Seite des Eingabekörpers mit dem Eingabekörper verbunden. Vorzugsweise ist die Schlaufe mit der ersten Fläche des Eingabekörpers und/oder mit der zweiten Fläche des Eingabekörpers verbunden.

In bevorzugter Ausführungsform entspricht das Gehäuse des 3D-Eingabegeräts dem Gehäuse eines Mobilgeräts. Bei dem Mobilgerät handelt es sich insbesondere um ein Mobiltelefon oder einen Tabletcomputer oder ein Laptop, vorzugsweise ein Convertible-Notebook, oder ein Navigationsgerät. Bei einer derartigen Ausführung, bei der das Gehäuse des 3D-Eingabegeräts dem Gehäuse eines Mobilgeräts entspricht, ist es bevorzugt, dass eine nötige Energieversorgung und/eine Auswertvorrichtung des 3D-Eingabegeräts, insbesondere der Sensorvorrichtung, über die vorhandene Energieversorgung und/oder Rechenleistung des Mobilgeräts ausgeführt ist. Beispielsweise kann die Sensorvorrichtung energieübertragend mit dem Akku eines Mobilgeräts verbunden sein. Auch ist es möglich, dass die Sensorvorrichtung mit dem Prozessor eines Mobilgeräts datenübertragend verbunden ist.

Die Sensorvorrichtung weist sechs Sensoreinheiten auf. Jede Sensoreinheit weist mindestens einen eindimensionalen magnetoresistiven Sensor und mindestens einen, diesem Sensor zugeordneten magnetischen Sender auf. Jede Sensoreinheit ist hierbei derart ausgeführt, dass diese mindestens eine Komponente der Bewegung des Eingabekörpers relativ zum Gehäuse erfasst. Bei dem mindestens einen Sensor handelt es sich vorzugsweise um einen Sensor vom Typ AMR (anisotroper magnetoresistiver Effekt), GMR (riesiger magnetoresistiver Effekt), CMR (kolossaler magnetoresitiver Effekt) oder TMR (tunnel magnetoresistiver Effekt). Bei mehreren Sensoren ist die Verwendung verschiedener Sensortypen möglich.

Bevorzugt ist es, dass die mindestens eine Sensoreinheit gemäß der Definition der Sensoreinheit aus DE 10 2017 206025 A1 ausgeführt ist.

Weitergehend ist es bevorzugt, dass jede Sensoreinheit exakt einen Sensor und/oder exakt einen Sender aufweist. Bei dem Sender handelt es sich insbesondere um einen Magnet, vorzugsweise als Permanentmagnet, auch Dauermagnet genannt, ausgeführt. Bei einem eindimensionalen Sensor handelt es sich um einen derartigen Sensor, der eine eindimensionale Sensorrichtung aufweist, entlang der der Sensor Bewegungen des ihm zugeordneten Senders erfassen kann. Vorzugsweise handelt es sich um einen magnetoresistiven Sensor, der die Richtung von Feldlinien zur Ermittlung einer Bewegung misst. Vorzugsweise sind mindestens drei Sensoren bezüglich ihrer Sensorrichtung parallel zueinander angeordnet und mindestens drei weitere Sensoren ebenfalls bezüglich ihrer Sensorrichtung parallel zueinander angeordnet, wobei die Sensorrichtung der mindestens ersten drei Sensoren senkrecht zu der Sensorrichtung der mindestens weiteren drei Sensoren steht. Bevorzugt ist es, dass bei exakt sechs Sensoren, die drei ersten Sensoren und die drei weiteren Sensoren auf einer Kreisbahn mit einem Abstand von jeweils 120° zueinander angeordnet sind. Hierbei ist es besonders bevorzugt, dass alle Sensoren jeweils einen Abstand von 60° zueinander aufweisen. Die Kreisbahn der ersten Sensoren und die Kreisbahn der weiteren Sensoren sind vorzugsweise jeweils in einer Ebene angeordnet, wobei die beiden Ebenen bevorzugt ineinander liegen oder echt parallel sind. Bei echt parallelen Ebenen ist es möglich, dass die Sensoren derart angeordnet sind, dass eine Verbindungslinie zwischen einem Sensor der drei ersten Sensoren und einem der drei weiteren Sensoren senkrecht zu den Ebenen steht, wobei die Anordnung der Sensoren vorzugsweise derart ist, dass drei dieser Verbindungslinien existieren.

Wie oben beschrieben erfasst ein magnetoresistiver Sensor die Feldlinien, die von einem Magnet ausgehen. Dabei wird die Richtung der Feldlinien gemessen und nicht die Feldstärke. Bewegen sich Magnet und magnetoresistiver Sensor relativ zueinander - entlang der messempfindlichen Sensorrichtung - kann der Sensor die Position zum Magnet messen. Bei Bewegungen, die senkrecht zur Richtung sind, führt diese zu keiner bzw. fast keiner Änderung der gemessenen Position.

Verschaltet man vier magnetoresistive Sensoren, bzw. Teilsensoren, bspw. in einem Chip zu einer Wheastone'schen Messbrücke zusammen, erhält man zwei Spannungen, die abhängig vom vorhandenen Magnetfeld sind. Das Magnetfeld wird durch einen Magnet erzeugt und die resultierenden beiden Spannungen stellen das Sinus- bzw. Cosinus-Signal des Positionssensors dar.

Durch die Anwendung des Arkustangens $\alpha$ = arctan2(Cosinus-Signal, Sinus-Signal) können die beiden Sensor-Spannungen in den Winkel $\alpha$ zusammengefasst werden. Sein Wertebereich reicht von -$\pi$ bis +$\pi$. Darüberhinausgehende Werte führen zu nicht eindeutigen Messwerten, weil die Funktion arctan2() eine periodische Funktion - mit der Periode $2\pi$ - ist. Eine einfache Skalierung rechnet den Messwert Winkel $\alpha$ von -$\pi$ bis +$\pi$ auf einen Abstand - beispielsweise mm - um. Mit insgesamt sechs einzelnen Sensoreinheiten, liegen also sechs Messwerte $\alpha_1$, $\alpha_2$, $\alpha_3$, $\alpha_4$, $\alpha_5$, $\alpha_6$ vor.

Eine geeignete Eichmatrix kann die ermittelten sechs Abstände in die Koordinaten der Verschiebung (X, Y, Z) und Winkeldrehung (A, B, C) umrechnen.

Das Bewegen des Magneten entlang der für den magnetoresistiven Positionssensor empfindlichen Bewegungsrichtung, also der Sensorrichtung führt zu einer quasi linearen Änderung der gemessenen Position. Aus der geometrischen Anordnung aus mindestens sechs einzelnen Sensoreinheiten kann die dazugehörige Eichmatrix M berechnet werden.

$$\begin{pmatrix} X \\ Y \\ Z \\ A \\ B \\ C \end{pmatrix} = M \begin{pmatrix} \alpha_1 \\ \alpha_2 \\ \alpha_3 \\ \alpha_4 \\ \alpha_5 \\ \alpha_6 \end{pmatrix}$$

Eine zweite Möglichkeit die Eichmatrix zu bestimmen, ist durch eine Kalibrierung gegeben. Dabei werden bekannte Auslenkungen der Anordnung vorgenommen und die dazugehörigen Messwerte aller Sensoreinheiten erfasst. Daraus lässt sich ebenfalls eine Eichmatrix berechnen.

Vorstehend genannte, sowie mögliche weitere und/oder zusätzliche, Auswertungen, wie z.B. Berechnungen zur Ermittlung der Relativbewegung und/oder Relativposition aus den erfassten Sensorwerten, werden von einer Auswertvorrichtung des 3D-Eingabegeräts durchgeführt. Ist das 3D-Eingabegerät mit einem Mobilgerät verbunden so ist es bevorzugt, dass der Prozessor des Mobilgeräts die Funktion der Auswertvorrichtung des 3D-Eingabegeräts übernimmt.

In bevorzugter Ausführungsform sind jegliche Sensoren mit dem Gehäuse verbunden, insbesondere auf dem Gehäuse angebracht oder in das Gehäuse integriert. Alternativ oder zusätzlich sind jegliche Sender mit dem Eingabekörper verbunden, insbesondere auf dem Eingabekörper angebracht oder in den Eingabekörper integriert.

Das erfindungsgemäße 3D-Eingabegerät weist mindestens eine Federvorrichtung auf. Diese mindestens eine Federvorrichtung ist mit dem Gehäuse und dem Eingabekörper derart verbunden, dass der Eingabekörper in der Ruhestellung eine Fixposition, auch Ruheposition genannt, relativ zum Gehäuse aufweist. Diese fixe Position beschreibt die Position des Eingabekörpers relativ zum Gehäuse, wenn der Eingabekörper nicht relativ zum Gehäuse bewegt bzw. nicht relativ zum Gehäuse ausgelenkt ist. Wird der Eingabekörper relativ zum Gehäuse bewegt, so kehrt er aufgrund der Federvorrichtung nach vollzogener Bewegung, insbesondere wenn der Eingabekörper losgelassen wird, in die Ruheposition zurück. Die Verbindung der Federvorrichtung mit dem Gehäuse und/oder mit dem Eingabekörper kann bspw. starr oder auch berührend ausgestaltet sein. Eine solche berührende Verbindung ist insbesondere derart ausgestaltet, das die Federvorrichtung mit dem Gehäuse und/oder dem Eingabekörper nicht starr, bspw. einstückig, verbunden ist, sondern lediglich ein berührender Kontakt vorliegt. Vorzugsweise liegt dieser berührende Kontakt permanent, also auch während jeglichen Relativbewegungen von Gehäuse und Eingabekörper, vor. Andererseits ist es auch möglich, dass, zumindest zeitweise, kein berührender Kontakt vorliegt und somit Federvorrichtung sowie Gehäuse und/oder Eingabekörper einen Abstand aufweisen.

Die Federvorrichtung weist exakt eine oder zwei elastische Matten auf. Zusätzlich ist es bevorzugt, dass die Federvorrichtung mindestens eine Feder aufweist. Bei der Feder handelt es sich vorzugsweise um eine klassische Verformungsfeder, wie bspw. eine Spiralfeder, oder eine Drahtfeder, insbesondere aus Metall, oder eine Gummifeder, wie bspw. Gummiklötze. Für die Feder und die elastische Matte ist es bevorzugt, Materialien zu verwenden, die hysteresefrei, bzw. hysteresearm sind. Vorzugsweise werden Metalle und/oder Kunststoffe, wie bspw. Elastomere, Silikone oder Stähle, als Materialien für die Feder und/oder die Matte verwendet. Auch Materialkombinationen und die Verwendung unterschiedlicher Federn und/oder Matten ist möglich. Bevorzugt ist es, dass die exakt eine oder zwei elastischen Matten und/oder die mindestens eine Feder einerseits mit dem Gehäuse und andererseits mit dem Eingabekörper fest, insbesondere starr, verbunden ist. Möglich ist es auch, dass die Feder und/oder die Matte nur mit dem Gehäuse und/oder dem Eingabekörper fest, insbesondere starr, verbunden ist. Werden bspw. Drahtfedern eingesetzt, so ist es möglich, dass diese mit einem Ende mit dem Gehäuse starr verbunden sind, das andere Ende jedoch lediglich über den Eingabekörper ragt, bzw. diesen berührt. Darüber hinaus ist es möglich, einen Schlauch als Feder zu nutzen. Hierbei ist eine Ausführung bevorzugt, bei der der Schlauch über den Eingabekörper verläuft, bspw. gespannt ist, und im Bereich der Enden des Schlauchs starr mit dem Gehäuse verbunden ist. Werden hingegen z.B. Spiralfedern als Federn eingesetzt, so können diese zwischen Gehäuse und Eingabekörper angeordnet sein und einerseits mit dem Gehäuse und andererseits mit dem Eingabekörper starr verbunden sein. Bevorzugt ist es, dass die Federvorrichtung exakt zwei elastische Matten aufweist.

Diese elastischen Matten sind vorzugsweise derart angeordnet, dass diese beidseitig die Öffnung des Gehäuses, in der der Eingabekörper angeordnet ist, zur Umgebung hin abschließen. Zusätzlich ist es bevorzugt, dass die Federvorrichtung mindestens drei Federn, bspw. Drahtfedern, aufweist, die in einer Ebene, mit einem Abstand von jeweils 120° zueinander, angeordnet sind. In bevorzugter Ausführungsform weist das 3D-Eingabegerät mindestens einen Stopper, zur Beschränkung der Beweglichkeit des Eingabekörpers relativ zum Gehäuse, auf. Bei dem mindestens einen Stopper handelt es sich vorzugsweise um einen mechanischen Widerstand, wie beispielsweise einen Dämpfer. Der mindestens eine Stopper kann derart ausgeführt sein, dass dieser eine Bewegung des Eingabekörpers relativ zum Gehäuse verhindert, die zu einer Beschädigung der Beweglichkeit des 3D-Eingabegeräts führen würde. Alternativ oder zusätzlich kann der Stopper derart ausgeführt sein, dass dieser eine Bewegung des Senders relativ zum Sensor einer jeden Sensoreinheit definiert, so dass der Sender sich stets innerhalb des durch den Sensor zu erfassenden Sensorbereichs befindet. Vorzugsweise ist der Stopper mit dem Gehäuse und/oder mit dem Eingabekörper verbunden.

Eine Verschiebung und/oder Winkeldrehung, insbesondere des Eingabekörpers, verursacht bei eingesetzten Feder- und/oder Stoppervorrichtungen eine Dehnung bzw. Stauchung. Mit Hilfe des Federgesetzes $F = c \cdot s$ - mit der Kraft F in [N], der Strecke s in [mm] und der Federkonstante c in $\left[\frac{N}{mm}\right]$ - können die auftretenden Kräfte ermittelt werden. Aufgrund der geometrischen Anordnung der Feder- und/oder Stoppervorrichtungen, insbesondere dem Abstand zum Drehzentrum, können auch Drehmomente auftreten. Das hier vorgestellte 3D-Eingabegerät kann dementsprechend auch Kräfte und/oder Momente erfassen. Mit einer geeigneten Eichmatrix kann das 3D-Eingabegerät Kräfte und Drehmomente ermitteln und ausgeben.

Mit Hilfe des Gesetzes von Newton, das die Beziehung zwischen Kraft, Masse und Beschleunigung ($F = m \cdot a$, F in [N], m in [kg] und a in $\left[\frac{m}{s^2}\right]$) herstellt und dem äquivalenten Gesetz zur Beziehung zwischen Drehmoment, Massenträgheitsmoment und Winkelbeschleunigung ($M = J \cdot \alpha$, M in [Nm], J in [kgm$^2$] und $\alpha$ in $\left[\frac{1}{s^2}\right]$), kann das 3D-Eingabegerät mit einer geeigneten Eichmatrix auch Beschleunigungen bzw. Winkelbeschleunigungen messen.

Es ist bevorzugt, dass das 3D-Eingabegerät mindestens einen, insbesondere dreidimensionalen, Beschleunigungssensor aufweist. Der Beschleunigungssensor erfasst die Orientierung und/oder die Bewegung des Gehäuses und/oder des Eingabekörpers im Raum. Bei einem beliebigen Halten des Gehäuses im Raum wirkt der Gravitationsvektor der Erde entsprechend mit einer Orientierung auf das 3D-Eingabegerät. Hierdurch kann es zu einer erfassten Auslenkung des Eingabekörpers relativ zum Gehäuse kommen. Mithilfe mindestens eines Beschleunigungssensors ist es möglich, diese erfasste Auslenkung zu eliminieren. Bevorzugt ist es, dass das Gehäuse den mindestens einen Beschleunigungssensor aufweist.

Bei dem erfindungsgemäßen Mobilgerät handelt es sich insbesondere um ein Mobiltelefon oder einen Tabletcomputer oder ein Laptop oder ein Navigationsgerät, das mindestens ein erfindungsgemäßes 3D-Eingabegerät aufweist. Bevorzugt ist es, dass das Mobilgerät zwei 3D-Eingabegeräte aufweist. Handelt es sich bei dem Mobilgerät um ein Mobiltelefon, so ist es möglich, dass das 3D-Eingabegerät unterhalb des Displays, wo sich häufig eine Hometaste befindet, angeordnet wird. Hierbei ist es bevorzugt, dass das 3D-Eingabegerät die Funktion der Hometaste, sowie ggf. weitere Funktionen gemäß der Funktion des 3D-Eingabegeräts, übernimmt. Wird das 3D-Eingabegerät auch als Taste, insbesondere als Hometaste, verwendet, so ist es bevorzugt, einen Schwellwert zu definieren, so dass aus den kontinuierlichen Sensormesswerten Tastenfunktionen, wie "ge-

drückt" oder "nicht gedrückt" abgeleitet werden können. Weist das Mobilgerät zwei erfindungsgemäße 3D-Eingabegeräte auf, sind diese vorzugsweise beidseitig eines Displays des Mobilgeräts angeordnet.

Die erfindungsgemäße 3D-Fernsteuerung weist mindestens ein erfindungsgemäßes 3D-Eingabegerät auf, wobei das Gehäuse mit einem Mobiltelefon oder Tabletcomputer oder Laptop oder Navigationsgerät verbindbar ist. Bei einer derartigen Verbindung handelt es sich in bevorzugter Weise um eine anbringbare bzw. ansteckbare Verbindung, die nicht einstückig ausgebildet ist. Hierbei kann das Gehäuse derart ausgebildet sein, dass es im Wesentlichen der Form einer Handyhülle oder einer Tablethülle entspricht und derart mit einem Mobiltelefon oder Tabletcomputer verbunden werden kann. Bevorzugt ist es hierbei, dass das 3D-Eingabegerät datenübertragend und/oder energieübertragend mit dem Mobilgerät verbunden ist. Dies kann beispielsweise derart ausgeführt sein, dass das Gehäuse über eine Steckverbindung mit dem Ladegerätanschluss eines Mobilgeräts verbindbar ist. Alternativ oder zusätzlich ist eine Daten- und/oder Energieübertragung mittels Induktion und/oder drahtloser Verbindung möglich.

Nachfolgend wird die Erfindung anhand von bevorzugten Ausführungsformen unter Bezugnahme auf die anliegenden Zeichnungen näher erläutert. Es zeigen:

Fig. 1        eine schematische Draufsicht auf ein exemplarisches 3D-Eingabegerät,

Fig. 2a, 2b, 2c        verschiedene schematische Ansichten eines erfindungsgemäßen 3D-Eingabegeräts im Rahmen eines Mobilgeräts,

Fig. 3 bis 6        schematische Seitenansichten verschiedener Ausführungsformen von erfindungsgemäßen 3D-Eingabegeräten in Mobilgeräten, und

Fig. 7        eine schematische Schnittansicht einer weiteren Ausführungsform eines erfindungsgemäßen 3D-Eingabegeräts.

In den Figuren werden gleiche Elemente mit den gleichen Bezugszeichen versehen.

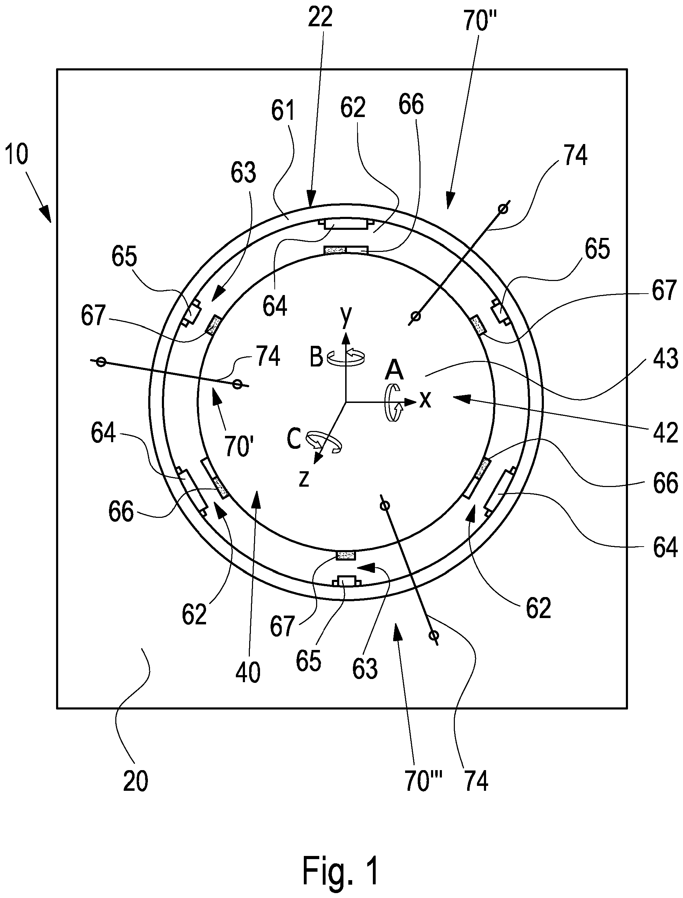

Das 3D-Eingabegerät 10 aus Fig. 1 weist ein quaderförmiges Gehäuse 20 auf. Das Gehäuse 20 ist mit einer von der Oberseite zur Unterseite des Gehäuses verlaufenden Bohrung 22 versehen. Innerhalb der Bohrung ist ein Hohlzylinder 61 angeordnet. Dieser Hohlzylinder 61 ist mit dem Gehäuse 20 drehfest verbunden. Auch ist es möglich, dass der Hohlzylinder 61 mit dem Gehäuse 20 einstückig, auch als integriert bezeichnet, ausgeführt ist.

Auf der nach innen weisenden Mantelfläche des Hohlzylinders 61 sind sechs eindimensionale magnetoresistive Sensoren 64, 65 angeordnet. In dargestellter Ausführungsform handelt es sich bei diesen Sensoren 64, 65 um drei Sensoren 64, die eine parallel zur Bildebene verlaufende Sensorrichtung aufweisen. Diese drei Sensoren 64 sind in einem Abstand von 120° zueinander angeordnet. Ebenfalls in einem Abstand von 120° zueinander angeordnet sind drei Sensoren 65 dargestellt, die eine senkrecht zur Bildebene verlaufende Sensorrichtung aufweisen.

Innerhalb des Hohlzylinders 61 befindet sich ein Eingabekörper 40, wobei in dargestellter Ausführungsform die erste Fläche 43 auf der ersten Seite 42 des Eingabekörpers 40 zu sehen ist. Nicht zu sehen ist in Fig. 1 die zweite Fläche 45 auf der zweiten Seite 44 des Eingabekörpers 40, die sich auf der gegenüberliegenden Rückseite befindet.

Der Eingabekörper 40 ist gemäß des mittig dargestellten Koordinatensystems frei relativ zu dem Gehäuse 20 bzw. dem Hohlzylinder 61 bewegbar. Folglich kann der Eingabekörper entlang der sechs Komponenten, nämlich drei Verschiebungen X, Y, Z und drei Winkeldrehungen A, B, C, relativ zum Gehäuse 20 bewegt werden.

Gemäß einem Beispiel, das nicht unter den Wortlaut des Anspruchs 1 fällt, ist der Eingabekörper 40 zum Halten in der Ruheposition statt über eine Federvorrichtung, die aus exakt einer oder zwei elastischer Matten besteht, über eine Federvorrichtung 70 (70', 70" 70‴), die aus drei Federn 74 besteht, mit dem Gehäuse 20 verbunden. Hierbei sind die Federn an den beiden Endbereichen jeweils einerseits mit dem Eingabekörper 40 und andererseits mit dem Gehäuse 20 fest, insbesondere starr, verbunden. Im Gegensatz zu der dargestellten Ausführung ist es, bspw. beim Einsatz von Drahtfedern als Federn 74, ebenso möglich, dass die Federn 74 nur mit dem Gehäuse 20 fest verbunden sind und lediglich über den Eingabekörper 40 ragen, bzw. berührend mit diesem verbunden sind, jedoch die Federn 74 keine starre Verbindung zum Eingabekörper 40 aufweisen. Die Federvorrichtung 70 sorgt dafür, dass der Eingabekörper 40 nicht aus dem Gehäuse herausfällt. Darüber hinaus definiert die Federvorrichtung 70 eine Ruheposition des Eingabekörpers relativ zum Gehäuse 20, in die der Eingabekörper 40 nach einer Auslenkung, insbesondere bei einem Loslassen, zurückkehrt.

Der Eingabekörper 40 weist in dargestellter Ausführungsform eine Vollzylinderform auf. Auf der nach außen weisenden Mantelfläche der Zylinderform des Eingabekörpers 40 sind jeweils, den Sensoren 64, 65 zugeordnet, sechs magnetische Sender 66, 67 angeordnet. Bei den sechs Sendern handelt es sich in dargestellter Ausführungsform um Permanentmagnete 66, 67. Die Permanentmagnete 66, 67 sind entsprechend der Sensorrichtungen derart angeordnet, dass deren Magnetisierung, also die Verbindungslinie der beiden Pole der Magnete 66, 67, parallel zu der Sensorrichtung des jeweils zugeordneten Sensor 64, 65 steht. Die Magnete 66 haben somit eine parallel zur Bildebene verlaufende Magnetisierung, und die Magnete 67 eine senkrecht zur Bildebene verlaufende Magnetisierung. Die drei Magnete 66 sowie die drei Magnete 67 sind jeweils im Abstand von 120° zueinander angeordnet.

Ein Magnet 66, 67 und ein diesem Magnet zugeordneter Sensor 64, 65 bilden zusammen eine Sensoreinheit 62, 63. Je Sensoreinheit 62, 63 misst der jeweilige Sensor 64, 65 die relative Bewegung des Magneten 66, 67 zu diesem Sensor 64, 65. Über eine Auswertung aller gemessenen Bewegungen der Magnete 66, 67 durch die Sensoren 64, 65 kann die Relativbewegung und/oder Relativposition des Eingabekörpers 40 zum Gehäuse 20 gemäß aller sechs Komponenten bestimmt werden.

Anstatt einer Anordnung der Federn 74 auf der dargestellten Oberseite des Gehäuses 20 und des Eingabekörpers 40, ist es in einem weiteren nicht beanspruchten Beispiel auch möglich, die Federn 74 auf der Unterseite oder der Unterseite und der Oberseite anzubringen. Auch ist es möglich, die Federn mittig, zwischen Unter- und Oberseite, anzuordnen. Darüber hinaus ist jegliche andere Anzahl an Federn möglich.

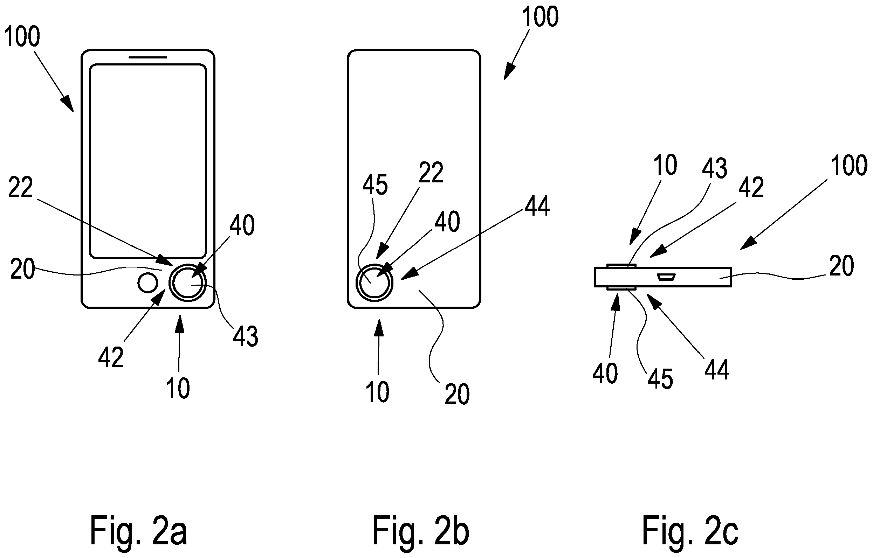

Die folgenden Figuren 2 bis 6 zeigen Mobilgeräte 100, die erfindungsgemäße 3D-Eingabegeräte 10 aufweisen. Die hierin beschriebenen Ausführungsformen bezüglich des 3D-Eingabegeräts 10 sind ebenfalls ohne Mobilgerät möglich und gültig. Beispielsweise entspricht hierbei dann das Mobilgerät 100 dem Gehäuse 20 des erfindungsgemäßen 3D-Eingabegeräts 10.

Fig. 2a zeigt die Draufsicht eines Mobilgeräts 100, wobei es sich um ein Handy, beispielsweise ein Smartphone, handelt. An der Unterseite weist das Handy 100 eine Bohrung 22 durch das Gehäuse 20 des Handys 100 auf. Innerhalb der Bohrung 22 ist ein vollzylinderförmiger Eingabekörper 40 angeordnet, von dem in Fig. 2a die erste Fläche 43 auf der ersten Seite 42 des Eingabekörpers 40 zu sehen ist. Im Gegensatz zu dem 3D-Eingabegerät 10 aus Fig. 1 weist das 3D-Eingabegerät 10 aus Fig. 2a keinen Hohlzylinder 61 auf. Demnach sind die Sensoren 64, 65 direkt auf der nach innen weisenden Bohrungsfläche der Bohrung 22 des Gehäuses 20 angeordnet. Die Sender 66, 67 befinden sich in Anlehnung an die Ausführungsform aus Fig. 1 auf der Mantelfläche der Zylinderform des Eingabekörpers 40.

Fig. 2b zeigt die Rückansicht des Mobilgeräts 100 aus Fig. 2a. Hierbei ist die zweite Fläche 45 auf der zweiten Seite 44 des Eingabekörpers 40 zu sehen.

Fig. 2c zeigt eine Seitenansicht des Mobilgeräts 100 aus den Figuren 2a und 2b, wobei es sich um die Unterseite des Handys handelt. Hierbei ist zu sehen, dass die beiden Bereiche auf der ersten Seite 42 und der zweiten Seite 44 des Eingabekörpers 40 nicht bündig mit der Kontur des Gehäuses 20 des Mobilgeräts 100 abschließen. Zwei Bereiche des Eingabekörpers 40, mit der ersten Fläche 43 und der zweiten Fläche 45, ragen somit aus dem Gehäuse 20 heraus.

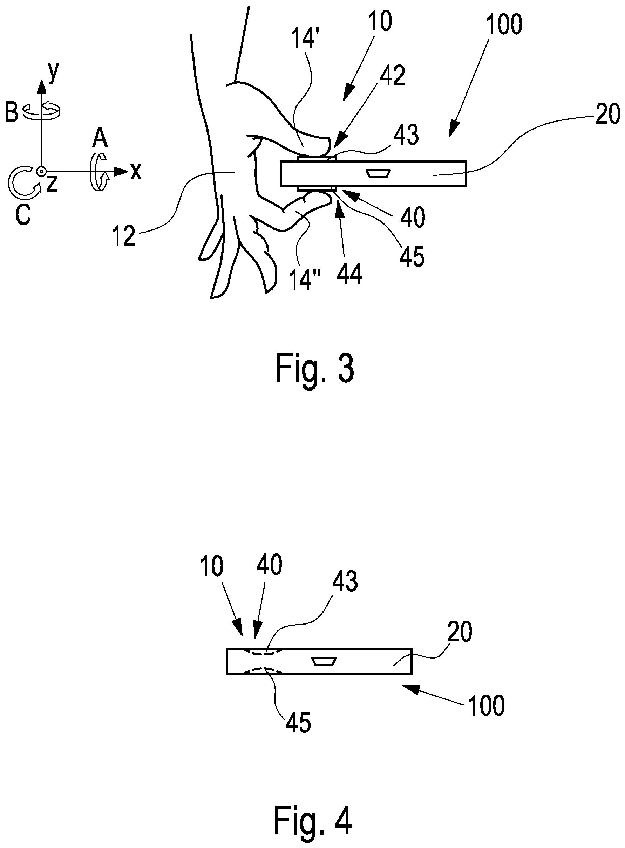

Fig. 3 zeigt das Mobilgerät 100 aus den Figuren 2a, 2b und 2c mit der Hand 12 eines Benutzers. Daumen 14' und Zeigefinger 14" der Hand 12 liegen einerseits auf der ersten Fläche 43 und andererseits auf der zweiten Fläche 45 des Eingabekörpers 40 auf. Mittels eines derartigen Greifens des Eingabekörpers 40 über die Hand 12 eines Benutzers, kann der Benutzer den Eingabekörper 40 relativ zum Gehäuse 20 auslenken. Bewegt der Benutzer beispielsweise beide Finger in gleiche Richtung entlang einer Ebene senkrecht zur Zeichenebene, so vollzieht der Eingabekörper 40 eine Verschiebung entlang X, Y, Z relativ zum Gehäuse 20. Führt der Benutzer beispielsweise beide Finger 14', 14" mit gegriffenem Eingabekörper 40 senkrecht zur Zeichenebene aus der Zeichenebene heraus, so vollzieht der Eingabekörper 40 eine Verschiebung entlang der Z-Achse (dargestelltes Koordinatensystem), wobei die Z-Achse senkrecht zur Zeichenebene steht. Bewegt der Benutzer beispielsweise Daumen 14' senkrecht zur Zeichenebene aus der Zeichenebene hinaus (in Z-Richtung), und bewegt er den Zeigefinger 14" senkrecht zur Zeichenebene in die Zeichenebene hinein (entgegen Z-Richtung), so vollzieht der Eingabekörper 40 eine Winkeldrehung A um die X-Achse. Wenn der Benutzer eine gleichgerichtete Rotation der beiden Finger 14', 14" tangential zu dem zylinderförmigen Eingabekörper 40 ausführt, so vollzieht der Eingabekörper 40 eine Winkeldrehung B um die Y-Achse. Derartige Bewegungen des Eingabekörpers können kombiniert werden, um derart eine, insbesondere gleichzeitige, Bewegung des Eingabekörpers 40 relativ zum Gehäuse 20 zu vollziehen. Derartig erfasste Bewegungen über das 3D-Eingabegerät können dann beispielsweise als Eingabebefehle genutzt werden.

Fig. 4 zeigt eine weitere Ausführungsform des Mobilgeräts 100 mit erfindungsgemäßem 3D-Eingabegerät 10. Anstelle der Ausführung des Eingabekörpers 40 aus Fig. 3, in der der Eingabekörper 40 aus dem Gehäuse 20 herausragt, schließt der Eingabekörper 40 aus Fig. 4 bündig mit dem Gehäuse 20 ab. Der Eingabekörper 40 weist hierbei eine Vollzylinderform auf, wobei die erste Fläche 43, die der Grundfläche der Zylinderform entspricht, eine Muldenform, auch als konkave Fläche 43 zu bezeichnen, aufweist. Die dieser Fläche 43 gegenüberliegende zweite Fläche 45 ist ebenfalls konkav ausgestaltet. Im Gegensatz zu der dargestellten Ausführungsform ist auch eine Kombination von konkaven, konvexen oder ebenen Ausführungen für die erste Fläche 43 und die zweite Fläche 45 möglich. Auch ist es möglich, dass der Eingabekörper 40 nicht über das Gehäuse 20 hinausragt und ebenfalls nicht bündig mit dem Gehäuse 20 abschließt, sondern vollständig innerhalb des Gehäuses 20 angeordnet ist.

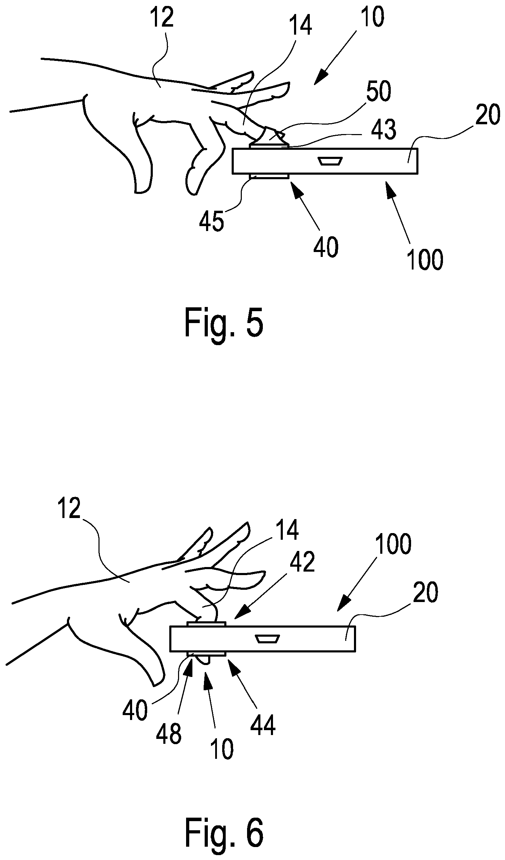

Fig. 5 zeigt eine weitere Ausführungsform eines Mobilgeräts 100 mit erfindungsgemäßem 3D-Eingabegerät 10. Die dargestellte Ausführungsform entspricht im Wesentlichen der Ausführungsform aus Fig. 3, wobei an der ersten Fläche 43 eine Schlaufe 50, insbesondere ausgeführt als Fingerschlaufe, angeordnet ist. Diese Schlaufe 50 ist mit der ersten Fläche 43 des Eingabekörpers 40 verbunden. Derart kann ein Benutzer mit einem oder mehreren Fingern 14 in die Schlaufe 50 eingreifen und derart eine Auslenkung des Eingabekörpers 40 entlang der sechs Komponenten, ohne beidseitiges Zugreifen auf die erste Fläche 43 und die zweite Fläche 45, erreichen.

Fig. 6 zeigt eine weitere Ausführungsform eines Mobilgeräts 100 mit erfindungsgemäßem 3D-Eingabegerät 10. Im Unterschied zu den vorstehend aufgeführten Ausführungsbeispielen weist der Eingabekörper 40 keine Vollzylinderform, sondern eine Hohlzylinderform auf. Ein Benutzer kann somit mit einem oder mehreren Finger 14 in und/oder durch den Eingabekörper 40 ein- bzw. durchgreifen. Mit Blick auf die Ausführungsform aus Fig. 5 ist es hierbei erneut möglich, lediglich mit einem einseitigen und/oder nur einem Finger eine Auslenkung des Eingabekörpers entlang der sechs Komponenten hervorzurufen. Das Eingreifen des Benutzers mit dem Finger 14 erfolgt hierbei in die innere Mantelfläche des Hohlzylinders des Eingabekörpers 40. Der Durchmesser des Lochs des Hohlzylinders des Eingabekörpers 40 entspricht hierbei im Wesentlichen dem Fingerdurchmesser eines Menschen, so dass ein möglichst nahes Anliegen des Hohlzylinders an dem Finger gewährleistet ist. Die Sensoren sind hierbei erneut an der Außenmantelfläche der Zylinderform des Eingabekörpers 40 angeordnet.

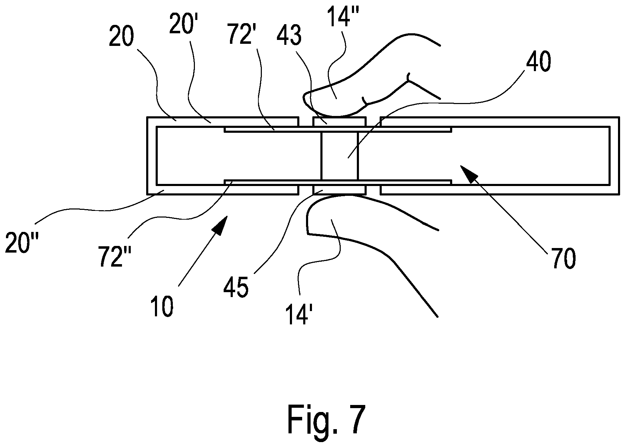

Fig. 7 zeigt eine weitere Ausführungsform eines erfindungsgemäßen 3D-Eingabegeräts 10. Anstelle der Feder 74 aus Fig. 1 erfolgt die Lagerung des Eingabekörpers 40 nahe des Gehäuses 20 über eine Federvorrichtung 70, die zwei elastische Matten 72', 72" aufweist. Die elastischen Matten 72', 72" sind jeweils sowohl fest mit dem Gehäuse 20, als auch fest mit dem Eingabekörper 40 verbunden. Diese festen Verbindungen verhindern einerseits, dass die elastischen Matten 72', 72" verrutschen. Die Elastizität der elastischen Matten 72', 72" wird vorzugsweise nur zwischen dem Gehäuse 20 und dem Eingabekörper 40 wirksam. Eine Verformung der elastischen Matten 72', 72" aufgrund der Einwirkung durch einen Benutzer verursacht eine Rückstellkraft, die den Eingabekörper 40 wieder in die Ruhelage bringen möchte. Vorzugsweise handelt es sich bei den elastischen Matten 72', 72' um hysteresefreie bzw. hysteresearme Matten derart, dass der Eingabekörper 40 wieder in die Ruhelage zurückkehrt. Anstelle der dargestellten Ausführung, bei der die elastischen Matten 72', 72" innerhalb des Gehäuses 20 an den Gehäusewänden 20' und 20" angeordnet sind, ist es auch möglich, dass die elastischen Matten 72', 72" an den Außenseiten der Gehäusewände 20', 20" des Gehäuses 20 angeordnet sind. Auch eine Anordnung der Matten 72', 72" innerhalb der Bohrung, bündig mit dem Gehäuse 20 nach außen hin ist möglich, so dass ein bündiges Erscheinungsbild ohne Spalte zwischen Gehäuse 20 und Eingabekörper 40 gegeben ist. Neben der Federfunktion der elastischen Matten 72', 72", bieten diese einen Abschluss bzw. eine Abdichtung gegenüber äußeren Umwelteinflüssen, beispielsweise auf das Innere des Mobilgeräts 100.

## Patentansprüche

1. 3D-Eingabegerät (10), insbesondere mobiles 3D-Eingabegerät, mit:

    einem Gehäuse (20);
    einem innerhalb des Gehäuses (20) angeordneten Eingabekörper (40), wobei der Eingabekörper (40) eine erste Seite (42) und eine der ersten Seite (42) gegenüberliegende zweite Seite (44) aufweist; und
    einer Sensorvorrichtung (60);
    wobei der Eingabekörper (40) relativ zum Gehäuse in sechs Komponenten, nämlich drei Verschiebungen und drei Winkeldrehungen in bzw. um die drei Achsen eines kartesischen Koordinatensystems, bewegbar ist;
    wobei die Sensorvorrichtung (60) die Bewegung des Eingabekörpers (40) relativ zum Gehäuse (20) erfasst;
    wobei die erste Seite (42) oder die zweite Seite (44) oder beide Seiten (42, 44) zusammen derart ausgestaltet sind, dass ein Benutzer über eine Einwirkung auf die erste Seite (42) und/oder die zweite Seite (44) eine Bewegung des Eingabekörpers (40) entlang der sechs Komponenten vollziehen kann,
    und wobei das 3D-Eingabegerät (10) mindestens eine Federvorrichtung (70) aufweist, wobei die Federvorrichtung (70) mit dem Gehäuse (20) und dem Eingabekörper (40) derart verbunden ist, dass der Eingabekörper (40) in der Ruhelage eine fixe Position relativ zum Gehäuse (20) aufweist,
    **dadurch gekennzeichnet, dass**
    die Sensorvorrichtung (60) mindestens sechs Sensoreinheiten (62, 63) aufweist, wobei jede der mindestens sechs Sensoreinheiten aufweist:

       mindestens einen eindimensionalen magnetoresistiven Sensor (64, 65); und
       mindestens einen, diesem Sensor (64, 65) zugeordneten, magnetischen Sender (66, 67);
       wobei jede der mindestens sechs Sensoreinheiten (62, 63) mindestens eine Komponente der Bewegung des Eingabekörpers (40) relativ zum Gehäuse (20) erfasst, und wobei die Federvorrichtung (70) exakt eine oder zwei elastische Matten (72) aufweist.

2. 3D-Eingabegerät (10) nach Anspruch 1, **dadurch gekennzeichnet, dass** der Eingabekörper (40) eine zylinderförmige, vorzugsweise kreiszylinderförmige, Form aufweist, wobei die erste Seite der Grundfläche der Zylinderform entspricht.

**3.** 3D-Eingabegerät (10) nach Anspruch 1, **dadurch gekennzeichnet, dass** der Eingabekörper (40) eine Kugelform aufweist.

**4.** 3D-Eingabegerät (10) nach Anspruch 1 oder 2, **dadurch gekennzeichnet, dass** der Eingabekörper (40) ferner aufweist:

eine, vorzugsweise konvexe oder konkave oder ebene, erste Fläche (43) auf der ersten Seite (42),
und/oder
eine, vorzugsweise konvexe oder konkave oder ebene, zweite Fläche (45) auf der zweiten Seite (44),
wobei die erste Fläche (43) und/oder die zweite Fläche (45) einem Benutzer zugänglich angeordnet sind derart, dass zumindest eine Fläche (43, 45), insbesondere beide Flächen (43, 45) gleichzeitig, durch einen Benutzer in Bewegung versetzt werden können.

**5.** 3D-Eingabegerät (10) nach Anspruch 1 bis 4, **gekennzeichnet durch** eine von der ersten Seite (42) zur zweiten Seite (44) verlaufende Öffnung (48) des Eingabekörpers (40), wobei vorzugsweise der Öffnungsdurchmesser im Wesentlichen dem Durchmesser eines menschlichen Fingers (14) entspricht.

**6.** 3D-Eingabegerät (10) nach Anspruch 1 bis 5, **gekennzeichnet durch** mindestens eine Schlaufe (50), insbesondere Fingerschlaufe, wobei die mindestens eine Schlaufe (50) auf der ersten Seite (42) und/oder der zweiten Seite (44) mit dem Eingabekörper (40) verbunden ist.

**7.** 3D-Eingabegerät (10) nach einem der Ansprüche 1 bis 6, **dadurch gekennzeichnet, dass** das Gehäuse (20) dem Gehäuse eines Mobilgeräts (100), insbesondere eines Mobiltelefons oder eines Tabletcomputers oder eines Laptops oder eines Navigationsgeräts, entspricht.

**8.** 3D-Eingabegerät (10) nach einem der Ansprüche 1 bis 7, **dadurch gekennzeichnet, dass** jede der mindestens sechs Sensoreinheiten (62, 63) exakt einen Sensor (64, 65) und/oder exakt einen Sender (66, 67) aufweist.

**9.** 3D-Eingabegerät (10) nach einem der Ansprüche 1 bis 8, **dadurch gekennzeichnet, dass** es sich bei jedem Sensor (64, 65) um einen Sensor vom Typ anisotroper magnetoresistiver Effekt, AMR, und/oder bei jedem Sender (66, 67) um einen Magnet, insbesondere einen Permanentmagnet, handelt.

**10.** 3D-Eingabegerät (10) nach einem der Ansprüche 1 bis 9, **dadurch gekennzeichnet, dass** jegliche Sensoren (64, 65) mit dem Gehäuse (20) verbunden, insbesondere auf dem Gehäuse (20) angebracht, sind und/oder jegliche Sender (66, 67) mit dem Eingabekörper (40) verbunden, insbesondere auf dem Eingabekörper (40) angebracht sind.

**11.** 3D-Eingabegerät (10) nach einem der Ansprüche 1 bis 10, **dadurch gekennzeichnet, dass** die Federvorrichtung (70) zusätzlich mindestens eine Feder (74), bspw. eine Drahtfeder, aufweist.

**12.** 3D-Eingabegerät (10) nach Anspruch 1 bis 11, **gekennzeichnet durch** mindestens einen Stopper (80), insbesondere ausgeführt als mechanischer Widerstand, zur Beschränkung der Beweglichkeit des Eingabekörpers (40) relativ zum Gehäuse (20).

**13.** 3D-Eingabegerät (10) nach Anspruch 1 bis 12, **gekennzeichnet durch** mindestens einen, insbesondere dreidimensionalen, Beschleunigungssensor (90), wobei der Beschleunigungssensor (90) die Orientierung und/oder die Bewegung des Gehäuses (20) und/oder des Eingabekörpers (40) im Raum erfasst.

**14.** Mobilgerät (100), insbesondere Mobiltelefon oder Tabletcomputer oder Laptop oder Navigationsgerät, mit mindestens einem, vorzugsweise zwei 3D-Eingabegeräten (10) nach Anspruch 1 bis 13.

**15.** 3D-Fernsteuerung, mit einem 3D-Eingabegerät (10) nach einem der Ansprüche 1 bis 6 oder 8 bis 13, wobei das Gehäuse (20) mit einem Mobiltelefon oder Tabletcomputer oder Laptop oder Navigationsgerät verbindbar ist.

**Claims**

**1.** 3D input device (10), in particular a mobile 3D input device, comprising:

a housing (20);
an input element (40) arranged in the housing (20), the input element (40) having a first side (42) and a second side (44) opposite the first side (42); and
a sensor device (60);
wherein the input element (40) is movable in six components relative to the housing, namely three displacements and three angular rotations in and about the three axes of a Cartesian coordinate system, respectively;
wherein the sensor device (60) detects the movement of the input element (40) relative to the housing (20); and
wherein the first side (42) or the second side (44) or both sides (42, 44) together are configured such that a user can perform a movement of the input element (40) along the six components by an action on the first side (42) and/or the second side (44), and wherein the 3D input device (10) comprises at least one spring device (70), the spring device (70) being connected with the housing (20) and the input element (40) such that the input element (40), when in a rest position, has a fixed position relative to the housing (20), **characterized in that** the sensor device (60) comprises at least six sensor units (62, 63), wherein each of the at least six sensor units comprises:

at least one one-dimensional magneto-resistive sensor (64, 65), and at least one magnetic transmitter (66, 67) associated to this sensor (66, 67); each of the at least six sensor units (62, 63) detecting at least one component of the movement of the input element (40) relative to the housing (20), and wherein the spring device (70) comprises exactly one or two elastic mats (72).

2. 3D input device (10) of claim 1, **characterized in that** the input element (40) has a cylindrical shape, preferably a circular cylindrical shape, the first side corresponding to the base of the cylindrical shape.

3. 3D input device (10) of claim 1, **characterized in that** the input element (40) has a spherical shape.

4. 3D input device (10) of claim 1 or 2, **characterized in that** the input element (40) further comprises:

a preferably convex or concave or planar first surface (43) on the first side (42), and/or a preferably convex or concave or planar second surface (45) on the second side (44), wherein the first surface (43) and/or the second surface (45) are arranged to be accessible to a user such that at least one surface (43, 45), in particular both surfaces (43, 45) at the same time, can be caused to move by a user.

5. 3D input device (10) of claims 1 to 4, **characterized by** an opening (48) of the input element (40) that extends from the first side (42) to the second side (44), wherein the opening diameter preferably substantially corresponds to the diameter of a human finger (14).

6. 3D input device (10) of claims 1 to 5, **characterized by** at least one loop (50), in particular a finger loop, the at least one loop (50) being connected with the input element (40) on the first side (42) and/or the second side (44).

7. 3D input device (10) of one of claims 1 to 6, **characterized in that** the housing (20) corresponds to the housing of a mobile device (100), in particular a mobile phone or a tablet computer or a laptop or a navigation device.

8. 3D input device (10) of one of claims 1 to 7, **characterized in that** each of the at least six sensor units (62, 63) comprises exactly one sensor (64, 65) and/or exactly one transmitter (66, 67).

9. 3D input device (10) of one of claims 1 to 8, **characterized in that** each sensor (64, 65) is sensor of the anisotropic magneto-resistive effect type, AMR, and/or each transmitter (66, 67) is a magnet, in particular a permanent magnet.

10. 3D input device (10) of claims 1 to 9, **characterized in that** all sensors (64, 65) are connected with the housing (20), in particular mounted on the housing (20), and/or all transmitters (66, 67) are connected with the input element (40), in particular mounted on the input element (40).

11. 3D input device (10) of one of claims 1 to 10, **characterized in that** the spring device (70) additionally comprises at least one spring (74), e.g. a wire spring.

12. 3D input device (10) of claims 1 to 11, **characterized by** at least one stopper (80), in particular configured as a mechanical resistance, for restricting the mobility of the input element (40) relative to the housing (20).

13. 3D input device (10) of claims 1 to 12, **characterized by** at least one, in particular three-dimensional, acceleration sensor (90), the acceleration sensor (90) detecting the orientation and/or the movement of the housing (20) and/or of the input element (40) in space.

14. Mobile device (100), in particular a mobile phone or a tablet computer or a laptop or a navigation device, with at least one, preferably two 3D input devices (10) of claims 1 to 13.

15. 3D remote control comprising a 3D input device (10) of one of claims 1 to 6 or 8 to 13, wherein the housing (20) is configured for connection with a mobile phone or a tablet computer or a laptop or a navigation device.

## Revendications

1. Appareil d'entrée 3D (10), en particulier appareil d'entrée 3D mobile, comprenant :

   un boîtier (20) ;
   un corps d'entrée (40) disposé à l'intérieur du boîtier (20),
   le corps d'entrée (40) comprenant un premier côté (42) et un second côté (44) opposé au premier côté (42) ; et
   un dispositif de capteur (60) ;
   le corps d'entrée (40) étant mobile par rapport au boîtier selon six composantes, à savoir trois déplacements et trois rotations angulaires dans ou autour des trois axes du système de coordonnées cartésiennes ;
   le dispositif de capteur (60) détectant le déplacement du corps d'entrée (40) par rapport au boîtier (20) ;
   le premier côté (42) ou le second côté (44) ou les deux côtés (42, 44) étant agencés ensemble de telle sorte qu'un utilisateur puisse effectuer un déplacement du corps d'entrée (40) le long des six composantes en agissant sur le premier côté (42) et/ou le second côté (44),
   et l'appareil d'entrée 3D (10) comprenant au moins un dispositif à ressort (70), le dispositif à ressort (70) étant relié au boîtier (20) et au corps d'entrée (40) de telle sorte que le corps d'entrée (40) ait une position fixe par rapport au boîtier (20) dans la position de repos,
   **caractérisé en ce que**
   le dispositif de capteur (60) comprend au moins six unités de capteur (62, 63), chacune desdites au moins six unités de capteur comprenant :

      au moins un capteur magnétorésistif unidimensionnel (64, 65) ; et
      au moins un émetteur magnétique (66, 67) associé à ce capteur (64, 65) ;
      chacune desdites au moins six unités de capteur (62, 63) détectant au moins une composante du déplacement du corps d'entrée (40) par rapport au boîtier (20), et
      le dispositif à ressort (70) comprenant exactement un ou deux tapis élastiques (72).

2. Appareil d'entrée 3D (10) selon la revendication 1, **caractérisé en ce que** le corps d'entrée (40) a une forme cylindrique, de préférence cylindrique circulaire, le premier côté correspondant à la surface de base de la forme cylindrique.

3. Appareil d'entrée 3D (10) selon la revendication 1, **caractérisé en ce que** le corps d'entrée (40) a une forme sphérique.

4. Appareil d'entrée 3D (10) selon la revendication 1 ou 2, **caractérisé en ce que** le corps d'entrée (40) comprend en outre :

      une première surface (43), de préférence convexe ou concave ou plane, sur le premier côté (42),
      et/ou
      une seconde surface (45), de préférence convexe ou concave ou plane, sur le second côté (44),
      la première surface (43) et/ou la seconde surface (45) étant agencées accessibles à un utilisateur de telle sorte qu'au moins une surface (43, 45), en particulier les deux surfaces (43, 45) en même temps puissent être amenées à se déplacer par un utilisateur.

5. Appareil d'entrée 3D (10) selon les revendications 1 à 4, **caractérisé par** une ouverture (48) du corps d'entrée (40) s'étendant du premier côté (42) au second côté (44), le diamètre de l'ouverture correspondant de préférence sensiblement au diamètre d'un doigt humain (14).

6. Appareil d'entrée 3D (10) selon les revendications 1 à 5, **caractérisé par** au moins une sangle (50), en particulier une sangle de doigt, ladite au moins une sangle (50) étant reliée au corps d'entrée (40) sur le premier côté (42) et/ou le second côté (44).

7. Appareil d'entrée 3D (10) selon l'une quelconque des revendications 1 à 6, **caractérisé en ce que** le boîtier (20) correspond au boîtier d'un appareil mobile (100), en particulier d'un téléphone mobile ou d'une tablette ou d'un ordinateur portable ou d'un appareil de navigation.

8. Appareil d'entrée 3D (10) selon l'une quelconque des revendications 1 à 7, **caractérisé en ce que** chacune desdites au moins six unités de capteur (62, 63) comprend exactement un capteur (64, 65) et/ou exactement un émetteur (66, 67).

9. Appareil d'entrée 3D (10) selon l'une quelconque des revendications 1 à 8, **caractérisé en ce que** chaque capteur (64, 65) est un capteur du type à effet magnétorésistif anisotrope, AMR, et/ou chaque émetteur (66, 67) est un aimant, en particulier un aimant permanent.

10. Appareil d'entrée 3D (10) selon l'une quelconque des revendications 1 à 9, **caractérisé en ce que** tous les capteurs (64, 65) sont connectés au boîtier (20), en particulier montés sur le boîtier (20), et/ou tous les émetteurs (66, 67) sont connectés au corps d'entrée (40), en particulier montés sur le corps d'entrée (40).

**11.** Appareil d'entrée 3D (10) selon l'une quelconque des revendications 1 à 10, **caractérisé en ce que** le dispositif à ressort (70) comprend en outre au moins un ressort (74), par exemple un ressort en fil.

**12.** Appareil d'entrée 3D (10) selon les revendications 1 à 11, **caractérisé par** au moins un arrêt (80), en particulier réalisé sous la forme d'une résistance mécanique, pour limiter la mobilité du corps d'entrée (40) par rapport au boîtier (20).

**13.** Appareil d'entrée 3D (10) selon les revendications 1 à 12, **caractérisé par** au moins un capteur d'accélération (90), en particulier tridimensionnel, le capteur d'accélération (90) détectant l'orientation et/ou le déplacement du boîtier (20) et/ou du corps d'entrée (40) dans l'espace.

**14.** Appareil mobile (100), en particulier téléphone mobile ou tablette ou ordinateur portable ou appareil de navigation, avec au moins un, de préférence deux appareils d'entrée 3D (10) selon les revendications 1 à 13.

**15.** Télécommande 3D, avec un appareil d'entrée 3D (10) selon l'une quelconque des revendications 1 à 6 ou 8 à 13, le boîtier (20) pouvant être connecté à un téléphone mobile ou à une tablette ou à un ordinateur portable ou à un appareil de navigation.

Fig. 1

Fig. 2c

Fig. 2b

Fig. 2a

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3611337 A1
- US 20120215475 A1
- US 2012287032 A1
- US 2013178293 A1
- US 5504502 A
- US 2017269587 A1
- DE 102010062458 A1
- EP 0480471 A2
- DE 102017206025 A1